Europäisches Patentamt

European Patent Office

Office européen des brevets

(11) Publication number: **0 137 141**
**B1**

# EUROPEAN PATENT SPECIFICATION

(45) Date of publication of patent specification: 05.10.88

(51) Int. Cl.⁴: **G 03 G 15/09**, G 03 G 15/08

(21) Application number: 84108110.2

(22) Date of filing: 11.07.84

(54) Toner Concentration Detecting Apparatus.

(30) Priority: 12.08.83 JP 146413/83

(43) Date of publication of application:
17.04.85 Bulletin 85/16

(45) Publication of the grant of the patent:
05.10.88 Bulletin 88/40

(84) Designated Contracting States:
DE FR IT

(56) References cited:
EP-A-0 029 710
US-A-3 956 108
US-A-3 999 687
US-A-4 131 081
US-A-4 240 375

(73) Proprietor: HITACHI, LTD.
6, Kanda Surugadai 4-chome Chiyoda-ku
Tokyo 100 (JP)

(72) Inventor: Suzuki, Mitsuo
53-402, Uenodai-Apartment House
310, Tajiricho Hitachi-shi (JP)

(74) Representative: Altenburg, Udo, Dipl.-Phys.
et al
Patent- und Rechtsanwälte Bardehle-
Pagenberg-Dost-Altenburg & Partner Postfach
86 06 20
D-8000 München 86 (DE)

Courier Press, Leamington Spa, England.

## Description

This invention relates to an apparatus for detecting the toner concentration of a developer, and more particularly to a detecting apparatus of the kind above described which is suitable for detecting the mixture ratio of a toner and a carrier in a developer used in a developing apparatus employed in the field of electrostatic recording, electrophotography, etc.

One form of electrostatic recording or electrophotographic recording apparatus utilizes a developer including a toner and a carrier (color powder) mixed at a predetermined ratio for turning an electrostatic latent image into a visible image. When such a developer is used for developing an electrostatic latent image, the mixture ratio between the carrier and the toner (the toner concentration) is desirably controlled to lie within a predetermined range. For this purpose, it is necessary to accurately detect the toner concentration of the developer. The carrier is classified into a magnetic carrier, a non-magnetic metal carrier, a non-metallic carrier, etc. Although the developer used in the present invention is not limited to a specific type including a specific type of carrier, the present invention will be described with reference to the use of the developer including the magnetic carrier, by way of example. Further, although there are various toner concentration detecting elements including those responding to changes in the permeability, magnetic flux density and conductivity, the present invention will be described with reference to the use of a toner concentration detecting element detecting the toner concentration on the basis of a change of the inductance of a coil, by way of example.

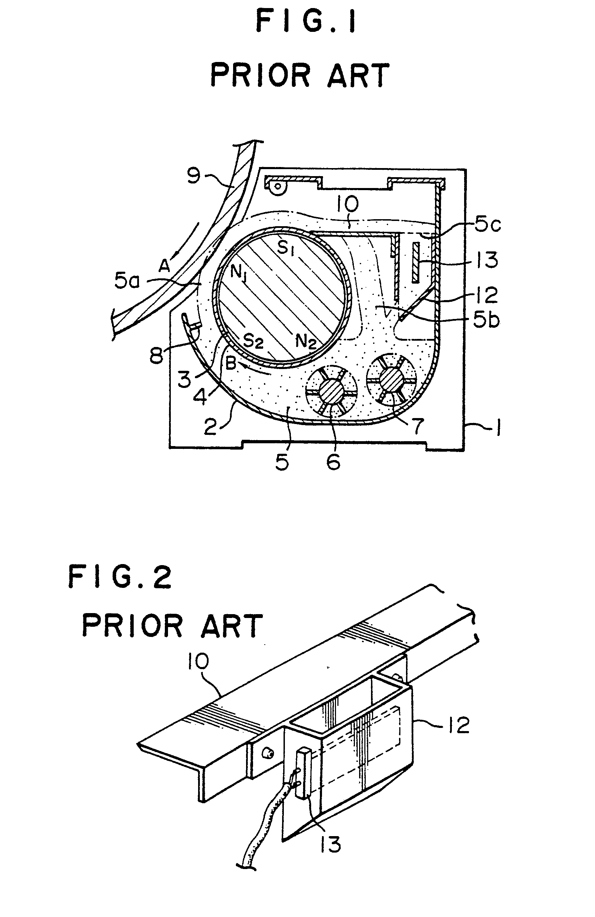

Fig. 1 shows a developing apparatus provided with a prior art detecting apparatus detecting the developer's toner concentration. Fig. 2 is an enlarged perspective view of the detector part of Fig. 1.

Referring to Figs. 1 and 2, a pair of side plates 1 are spaced apart by a predetermined distance from each other, and a developer container 2 is interposed between these side plates 1. A magnet roll 3 formed of a permanent magnet is circumferentially magnetized to have a plurality of magnetic poles $S_1$, $N_1$, $S_2$ and $N_2$ arranged in the sequential order and is secured to the side plates 1 in such a relation that the magnetic pole $N_1$ is opposed by a photosensitive drum 9 arranged to rotate in a direction as shown by the arrow A. A rotary sleeve 4 of a non-magnetic material is rotatably mounted around the outer periphery of the magnet roll 3 in concentric relation therewith and is driven by a drive unit (not shown) to rotate in a direction as shown by the arrow B. A developer 5 contained in the developer container 2 includes a mixture of a magnetic carrier and a toner, and agitators 6 and 7 disposed in the developer container 2 agitate the developer 5 to frictionally charge the toner.

By the magnetic force of the stationary magnetic force of the stationary magnet roll 3, the developer 5 is attracted onto the peripheral surface of the non-magnetic rotary sleeve 4, and the attracted developer 5 rotating with the non-magnetic sleeve 4 is restricted in thickness by a doctor blade 9 to form a developer brush 5a to be transported toward and onto the surface of the photosensitive drum 9. The transported developer brush 5a makes developing engagement at its peripheral surface with the surface of the photosensitive drum 9 having an electrostatic latent image thereon, thereby developing the latent image with the toner. When, thereafter, the magnetic brush 5a is brought to the position opposite to a scraper 10, the developer brush 5a is scraped off from the surface of the non-magnetic sleeve 4 by the scraper 10, and the greater part 5b of the developer 5 falls onto the agitators 6 and 7 for reuse. A portion 5c of the scraped developer 5 is guided toward and into a detector container 12 attached to the scraper 10.

The detector container 12 contains therein a detecting element 13 provided by shaping a coil conductor into a flat rectangular form with a resin. The developer 5c introduced into the detector container 12 flows downward along the both sides of the detecting element 13 to be discharged to the exterior of the container 12 for reuse. This arrangement is effective in that the toner concentration of the developer 5 can be detected on the basis of the inductance value of the coil of the detecting element 13 since the inductance value of the coil of the detecting element 13 depends upon the permeability of the developer 5. More precisely, the lower the toner concentration of the developer 5, the proportion of the magnetic carrier is larger, and the corresponding increase in the permeability of the developer 5 increases the inductance of the detecting element 13.

In such a toner concentration detecting apparatus, it is required that the developer 5c flows always uniformly through the detector container 12. It is also important form the aspect of accuracy of toner concentration detection that the developer 5c flows uniformly along the both sides of the detecting element 13. For this purpose, it is necessary to narrow the outlet of the detector container 12 to make the amount of outflow smaller than the amount of inflow, so that the developer 5c flows always uniformly through the detector container 12 while overflowing. Since the amount of inflow of the developer 5c is determined by the amount of the developer 5 transported by the non-magnetic sleeve 4, the sectional area of the outlet of the detector container 12 cannot be excessively increased. Further, depending on the fluidity of the developer 5 used for developing, clogging occurs at the outlet and other portions of the detector container 12, resulting in impossibility of insurance of stable flow of the developer 5. The fluidity of the developer 5 varies greatly depending on the factors including the particle shape of the carrier, the particle size distribution of the carrier and the toner concentration. Thus, the prior art detecting apparatus has been defective in that the kind of the developer 5 satisfactorily usable for developing is greatly limited, and the developer 5 cannot always flow stably through the detector container 12.

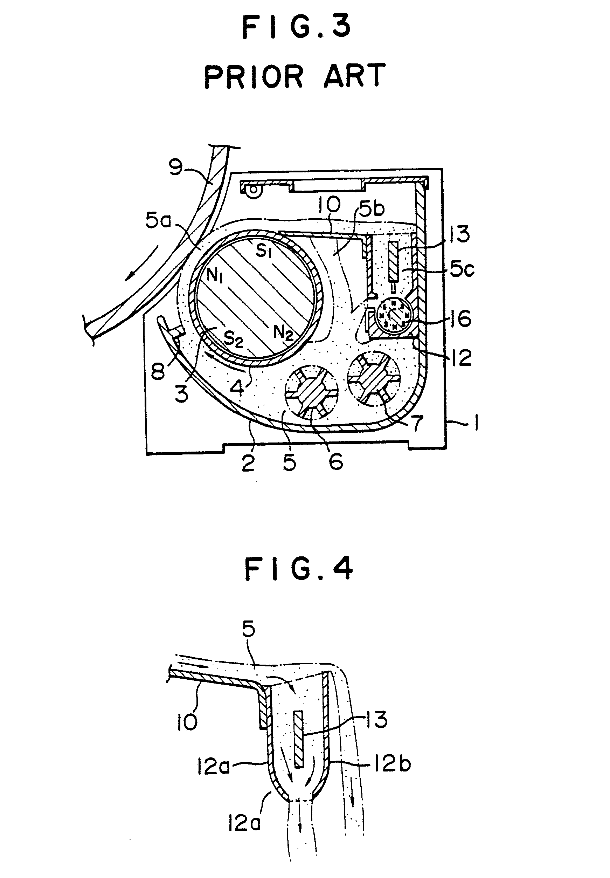

In an attempt to obviate such a defect, an improved apparatus as shown in Fig. 3 has been proposed in which an auxiliary magnet roll 16 for developer discharging purpose is provided so that a constant amount of the developer 5c can be forcedly discharged from the outlet of the detector container 12. However, the proposed detecting apparatus has also been defective in that it is difficult to ensure a uniform flow of the developer 5c along the both sides of the detecting element 13, and, also, the apparatus becomes complex and expensive.

As examples of publications disclosing the prior art apparatus described above, US—A—3,999,687 US—A—4,131,081 US—A—5,956,108 and US—A—4,240,375 can be cited.

It is therefore a primary object of the present invention to provide an improved toner concentration detecting apparatus which ensures a stable flow of the developer in the detector container so that the toner concentration can be accurately detected.

In accordance with the present invention an apparatus for toner concentration detection as defined in the claims is provided. This apparatus which attains the above object, is a toner concentration detecting apparatus for use in a developing apparatus comprising a developer container containing a developer including a carrier and a toner, means for transporting the developer contained in the developer container toward and onto the surface of a recording medium having an electrostatic latent image thereon, means for guiding a portion of the developer toward and into a detector container, and means for measuring the mixture ratio of the carrier and the toner in the developer introduced into the detector container, wherein the inner surfaces of opposing side walls of the detector container are so configured that they are formed of curved surfaces of large radii of curvature having their centers on the same side of the detector container and the passage defined between the side wall surfaces is gradually narrowed toward the outlet of the detector container, and a toner concentration detecting element is disposed along substantially the flowing direction of the developer flowing downward in the detector container, whereby to minimize the flow resistance of the detector container and improve the fluidity of the developer. The auxiliary magnetic pole acts to forcedly discharge the developer from the detector container.

The present invention will be apparent from the following detailed description taken in conjunction with the accompanying drawings, in which:

Fig. 1 is a schematic sectional view illustrating the structure of a proir art developing apparatus;

Fig. 2 is a perspective view of the toner concentration detecting part in Fig. 1;

Fig. 3 is a schematic sectional view illustrating the structure of another prior art developing apparatus;

Fig. 4 is a schematic sectional view of an improved detector container;

Figs. 5 and 6 are schematic sectional views of two forms respectively of the detector container according to the present invention; and

Fig. 7 is a schematic sectional view showing the structure of developing apparatus incorporating the embodiment of the toner concentration detecting apparatus of the present invention.

The present invention will now be described in detail with reference to Figs. 4 to 7. In an effort to obviate the prior art defects pointed out above, the inventors made various researches and studies on the prior art detector containers and then made trial manufacture of many models and experiments on the models. The results of experiments have clarified that, due to the abrupt reduction of the sectional area at and in the vicinity of the outlet of the prior art detector containers and due to the presence of corners in that portion, the large resistance against flow of the developer results in clogging at the corners and outlet portion, and vibrations result also in clogging on the both sides of the detecting element. It is well known that in general the resistance against flow of a fluid in a conduit greatly increases when the conduit includes corners or when the direction of fluid flow changes sharply. Although the developer itself is a solid, it flows in the form of a pulverulent fluid, and the above concept applies also to the developer in this respect.

From that standpoint, the inventors have made researches and studies on an improved form of the detector container 12 as shown in Fig. 4. In the improved detector container 12 shown in Fig. 4, the corners are eliminated, and side walls 12a and 12b restricting the amount of outflow of the developer are formed by curved surfaces of large radii of curvature gradually narrowing the passage, thereby reducing the resistance against flow of the developer. The results of an experiment conducted on the improved detector container 12 shown in Fig. 4 have proved that the performance of the improved detector container 12 is not conspicuously improved over that of the prior art detector container 12 shown in Fig. 1. The reason why the fluidity of the developer is not improved in spite of the reduced resistance of the detector container to the flow caused by the improved configuration of the passage is considered to be attributable to the fact that the flow direction of the developer portions flowing downward along the sides of the detecting element 13 is diverted inward by the curved inner surfaces of the side walls 12a and 12b of the detector container 12, and finally the developer portions flowing downward pass the lower end of the detecting element 13 collide with each other. Due to the collision of the developer portions in that zone, the force causing downward flow of the developer 5 toward the outlet of the detector container 12 is reduced to give rise to clogging in that zone, and, consequently, the fluidity of the developer 5 is not improved.

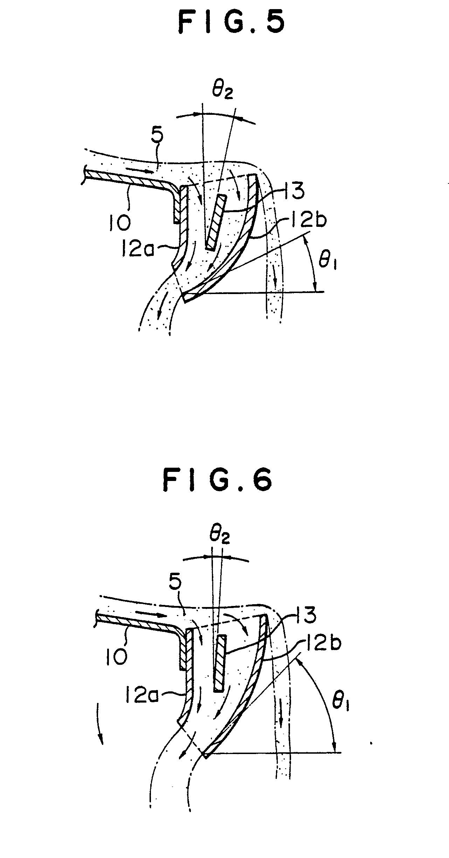

Embodiments of the present invention based on the results of researches and studies above described will now be described with reference to Figs. 5, 6 and 7.

In each of the detector containers 12 shown in Figs. 5 and 6, curved surfaces of large radii of curvature having their centers on the same side of the detector container 12 and upper planar surfaces contiguous to those curved surfaces constitute the inner surfaces of the two side walls 12a and 12b when the section is taken at right angles with respect to the flat detecting element 13. It will be seen that the passage portions of the developer 5 on the both sides of the detecting element 13 and the joined passage downstream of the detecting element 13 are gradually narrowed toward the outlet of the detector container 12 so that the developer 5 flows downward in substantially the same direction in the detector container 12. The flat detecting element 13 is disposed at the center of the passage and is inclined by an angle $\theta_2$ with respect to the perpendicular so that the resistance against flow can be minimized. By so configuring the passage in the detector container 12, the resistance of the inner wall surfaces of the detector container 12 against flow can be minimized and, also, the increase in the flow resistance due to the gradually reduced sectional area of the passage can be minimized. Further, the reduction of the fluid driving force in the flowing direction due to collision of the developer portions flowing downward along both sides of the detecting element 13 can also be suppressed to a minimum. Consequently, it has been experimentally confirmed that the developer shows a very satisfactorily fluidity. It has also been confirmed that the larger the inclination $\theta_1$ of the inner curved surface of the side wall 12b with respect to the horizontal, the better is the fluidity with an upper limit of the inclination $\theta_1$ of about 30°.

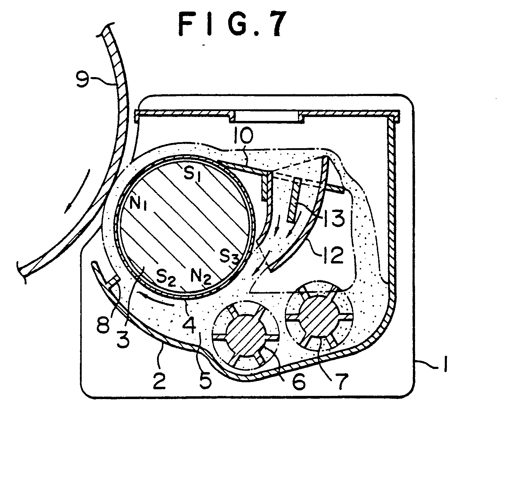

Fig. 7 shows one exemplary form of the developing apparatus incorporating the toner concentration detecting apparatus of the present invention. The detector container 12 is disposed in such a relation that the outlet thereof is situated adjacent to the non-magnetic rotary sleeve 4 disposed around the magnet roll 3 in concentric relation therewith. The magnet roll 3 is magnetized to have the magnetic poles $S_1$, $S_2$ and $N_2$ for developer transporting purpose in addition to the main magnetic pole $N_1$ for developing purpose. The magnet roll 3 is further provided, at a portion corresponding to the neighborhood of the outlet of the detector container 12, with an auxiliary magnetic pole $S_3$ of the same polarity as the magnetic pole $S_1$ disposed adjacent to the inlet of the detector container 12. By the action of the magnetic flux produced by the auxiliary magnetic pole $S_3$, the portion of the developer 5 flowing downward in the neighborhood of the outlet of the detector container 12 is forcedly drawn out and discharged.

Although the detecting element 13 employed in the aforementioned embodiments of the present invention is of the permeability sensitive type, it is apparent that it may be replaced by, for example, the type sensitive to the relative quantity of magnetic flux, the type sensitive to the relative flux density or the type sensitive to the conductivity (the electrical resistance) of the developer. Also, the magnetic carrier in the developer muy be replaced by a non-magnetic carrier. In such a case, the detecting element 13 is preferably of the type sensitive to the conductivity of the developer.

**Claim**

A toner concentration detecting apparatus for use in a developing apparatus comprising a developer container (2) containing a developer (5) including a carrier and a toner, means (3, 4) for transporting said developer contained in said developer container toward and onto the surface of a recording medium (9) having an electrostatic latent image thereon, means (10) for guiding a portion (5c) of said developer toward and onto a detector container (12), and means (13) for measuring the mixture ratio of the carrier and the toner in said developer introduced into said detector container, wherein the inner surfaces of two opposing side walls (12a, 12b) of said detector container (12) are so configured that they are formed of curved surfaces of large radii of curvature having their centers on the same side of said detector container and the passage defined between said side wall surfaces is gradually narrowed toward the outlet of said detector container, and a toner concentration detecting element (13) is disposed substantially along the direction of flows of said developer flowing downward in said detector container and said detector container (12) is disposed in the vicinity of said developer transporting means (3, 4) characterized in that said transporting means (3, 4) includes a magnet (3) having an auxiliary magnetic pole ($S_3$) disposed adjacent to the outlet of said detector container and having the same polarity of that of another magnetic pole ($S_1$) disposed adjacent to the guiding means (10), said auxiliary magnetic pole acting to forcedly discharge said developer from said detector container.

**Patentanspruch**

Tonerkonzentrationsdeterminiereinrichtung zur Verwendung in einer Entwicklungsvorrichtung, die einen Entwicklebehälter (2), der einen Entwickler (5) mit einem Träger und einem Toner enthält, eine Einrichtung (3, 4) zum Transport des in dem Entwicklerbehälter enthaltenen Entwicklers zu der und auf die Oberfläche eines Aufzeichnungsmedium (9), das ein latentes elektrostatisches Bild darauf trägt, eine Einrichtung (10) zum Leiten eines Teils (5c) des Entwicklers zu einem und auf einen Detektorbehälter (12), und eine Einrichtung (12) zur Messung des Gemischverhältnis von Träger und Toner in dem in den Entwicklerbehälter eingeführten Entwickler, aufweist, wobei die inneren Oberflächen von zwei einander gegenüberstehenden Seitenwänden (12a, 12b) des Detektorbehälters (12) so ausgebildet sind, daß sie aus gekrümmten Oberflächen mit großen Krümmungsradian gebildet sind, deren Mittelpunkte auf derselben Seite den Detektorbehälters liegen und daß die zwischen diesen Seitenwandoberflächen gebildete Passage sich allmählich gegen den Auslaß des Detektorbehälters hin verengt, und ein Tonerkonzentrationsdeterminierelement (13) im wesentlichen längs der Richtung des Flußes des nach unten in dem Detektorbehälter fließenden Entwicklers angeordnet ist, und der Entwicklerbehälter (12) in der Umgebung der Entwicklertransporteinrichtung (3, 4) angeordnet ist, dadurch gekennzeichnet, daß die Transporteinrichtung (3, 4) einen Magneten (3) einschließt, der einen Hilfsmagnetpol (S₃) hat, welcher benachbart dem Auslaß des Detektorbehälters angeordnet ist und dieselbe Polarität aufweist wie die eines weiteren Magnetpols (S₁), der benachbart zu der Leiteinrichtung (10) angeordnet ist, wobei der Hilfsmagnetpol zur kräftigen Abgabe der Entwicklers von dem Entwicklerbehälter wirkt.

**Revendication**

Dispositif pour détecter la concentration du toner, destiné à être utilisé dans un dispositif de developpement comportant une enceinte de développement (2) contenant un révélateur (5) comprenant un support et un toner, des moyens (3, 4) pour transporter ledit révélateur logé dans ladite enceinte de développement en direction du et sur la surface d'un support d'enregistrement (9) portant une image latente électrostatique, des moyens (10) pour guider une partie (5c) dudit révélateur en direction de et sur une enceinte de détection (12), et des moyens (13) pour mesurer le taux de mélange du support et du toner dans ledit révélateur introduit dans ladite enceinte de détection, et dans lequel les surfaces intérieures de deux parois latérales opposées (12a, 12b) de ladite enceinte de détection (12) sont agencées en étant formées par des surfaces courbes possédant de grands rayons de courbure dont les centres sont situés de même côté que ladite enceinte de détection, et le passage défini entre lesdites surfaces des parois latérales se rétrécit graduellement en direction de la sortie de ladite enceinte de détection, et un élément (13) de détection de la concentration du toner est disposé sensiblement dans la direction d'écoulement dudit révélateur descendant dans ladite enceinte de détection, et ladite enceinte de détection (12) est située au voisinage desdits moyens (3, 4) d'entraînement du révélateur, caractérisé en ce que lesdits moyens d'entraînement (3, 4) incluent un aimant (3) possédant un pôle magnétique auxiliaire (S₃) situé au voisinage de la sortie de ladite enceinte de détection et possédant la même polarité que celle d'un autre pôle magnétique (S₁) disposé au voisinage des moyens de guidage (10), ledit pôle magnétique auxiliaire agissant de manière à refouler à force ledit révélateur hors de ladite enceinte de détection.

# FIG.1

## PRIOR ART

# FIG.2

## PRIOR ART

1

# F I G . 3
## PRIOR ART

# F I G . 4

# F I G. 5

# F I G. 6

F I G. 7